(19) Europäisches Patentamt
European Patent Office
Office européen des brevets

(11) EP 1 776 390 B1

(12) EUROPÄISCHE PATENTSCHRIFT

(45) Veröffentlichungstag und Bekanntmachung des Hinweises auf die Patenterteilung:
**13.06.2012 Patentblatt 2012/24**

(21) Anmeldenummer: **05776174.4**

(22) Anmeldetag: **01.08.2005**

(51) Int Cl.:
***C08F 2/00*** (2006.01) ***C08F 4/04*** (2006.01)
***C08F 4/32*** (2006.01) ***C08F 220/18*** (2006.01)

(86) Internationale Anmeldenummer:
**PCT/EP2005/008296**

(87) Internationale Veröffentlichungsnummer:
**WO 2006/015751 (16.02.2006 Gazette 2006/07)**

(54) **VERFAHREN ZUR RADIKALISCHEN POLYMERISATION ETHYLENISCH-UNGESÄTTIGTER VERBINDUNGEN**

METHOD FOR RADICAL POLYMERIZATION OF ETHYLENICALLY UNSATURATED COMPOUNDS

PROCEDE POUR EFFECTUER LA POLYMERISATION RADICALAIRE D'UN OU DE PLUSIEURS COMPOSES ETHYLENIQUEMENT INSATURES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.08.2004 DE 102004037929**

(43) Veröffentlichungstag der Anmeldung:
**25.04.2007 Patentblatt 2007/17**

(73) Patentinhaber: **Evonik RohMax Additives GmbH
64293 Darmstadt (DE)**

(72) Erfinder:
- **ACKER, François
F-67160 Wissembourg (FR)**
- **SCHERER, Markus
50733 Köln (DE)**
- **DARDIN, Alexander
69514 Fischbachtal (DE)**
- **MASSOTH, Stephan
68647 Biblis (DE)**
- **AMRHEIN, Bernd
Cheshire, CH3 5JZ (GB)**
- **BLOOS, Detlef
69412 Eberbach (DE)**
- **DITTGEN, Valérie
F-67480 Rountzenheim (FR)**
- **ROOS, Alain
F-67660 Betschdorf (FR)**
- **BEINER, Jean-Marc
F-67000 Strasbourg (FR)**

(56) Entgegenhaltungen:
**US-A- 4 956 430 US-A- 5 605 970**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 776 390 B1

Printed by Jouve, 75001 PARIS (FR)

## Beschreibung

Die vorliegende Erfindung betrifft ein Verfahren zur radikalischen Polymerisation von ethylenisch-ungesättigten Verbindungen gemäss Anspruch 1.

Verfahren zur radikalischen Polymerisation von Alkyl(meth)acrylat-haltigen Monomermischungen sind bereits seit langem bekannt. Beispielsweise offenbart die Druckschrift EP 0 750 031 A2 Verfahren zur radikalischen Polymerisation einer Monomermischung umfassend:

(A) ungefähr 5 bis ungefähr 75 Gew.-% Alkylacrylatester-Monomere mit 1 bis 11 Kohlenstoffatomen in der Alkylgruppe,
(B) ungefähr 25 bis ungefähr 95 Gew.-% Alkylacrylatester-Monomere mit 12 bis ungefähr 24 Kohlenstoffatomen in der Alkylgruppe und
(C) ungefähr 0,1 bis ungefähr 20 Gew.-% Vinyl-substituierte, Stickstoff-Heterocyclen-Monomere, N,N-Dialkylaminoalkylacrylat-Monomere, N,N-Dialkylaminoalkylacrylamid-Monomere und/oder tert. Alkylacrylamid,

wobei die Summe der Bestandteile (A), (B) und (C) 100 Gew.-% ergibt. Bei einer ersten Ausführungsform des Polymerisationsverfahrens werden die zu polymerisierenden Monomere und ggf. ein Lösungsmittel und ggf. ein Kettenüberträger in einem Reaktor vorgelegt, der Polymerisationsinitiator zugegeben und der Ansatz für die gewünschte Reaktionszeit auf die gewünschte Reaktionstemperatur erwärmt.

Alternativ erfolgt die Polymerisation durch Zudosierung des Monomers und des Initiators, indem man zunächst eine Mischung aus den Monomeren und dem Polymerisationsinitiator herstellt, einen Teil dieser Mischung, üblicherweise 20 bis 40 Gew.-% in einem Reaktor vorlegt, den Reaktor auf die gewünschte Reaktionstemperatur erwärmt und den Rest der Mischung kontinuierlich zudosiert.

Beide Varianten sind aus technischer Sicht nicht vollkommen zufriedenstellend. Bei der ersten Variante, bei welcher die Gesamtmenge der Monomere vorgelegt und der Polymerisationsinitiator anschließend zugegeben wird, ist es aufgrund der exothermen Polymerisationsreaktion, insbesondere bei größeren Polymerisationsansätzen, oftmals nur schwer möglich, die Polymerisationstemperatur im gewünschten Temperaturbereich zu halten und eine gleichmäßige Polymerisation zu gewährleisten. Dies bedingt eine verminderte Reproduzierbarkeit des Polymerisationsverfahrens. Im Extremfall kann es weiterhin zu einem nicht mehr kontrollierbaren, stark exothermen Verlauf der Reaktion (sog "Trommsdorff-Effekt") kommen.

Die zweite Variante, bei welcher der Hauptteil der Monomere nach Reaktionsbeginn zudosiert wird, erleichtert zwar wesentlich die Kontrolle der Polymerisationsreaktion, insbesondere ihrer Temperatur. Jedoch ist sie vergleichsweise langsam und kostenintensiv.

In Anbetracht dieses Standes der Technik war es daher Aufgabe der vorliegenden Erfindung, ein Verfahren zur radikalischen Polymerisation von Alkyl(meth)acrylat-haltigen Monomerzusammensetzungen mit verbesserter Raum/Zeit-Ausbeute anzugeben, welches auf diese Weise Möglichkeiten zur Kapazitätssteigerung in Polymerisationsbetrieben eröffnet.

Die einzusetzenden Rohstoffe, wie Lösemittel, Kettenüberträger und Initiatoren, sollten sich von Typen, wie sie für bisherige Verfahren zum Einsatz kamen, nicht unterscheiden. Ebenso sollte eine Reaktionsbeschleunigung nicht dadurch erreicht werden, dass Verfahren in Anlehnung an in der Literatur jüngst beschriebene kontrollierte, radikalische Prozesse, wie beispielsweise ATRP oder RAFT, etabliert werden. Die Reaktionsprodukte sollten sich hinsichtlich Molekulargewicht und Molekulargewichtsverteilung nicht wesentlich von solchen unterscheiden, die in bisher beschriebenen radikalischen Polymerisationsprozessen verwendet wurden.

Das erfindungsgemäß anzugebende Verfahren sollte auch bei größeren Polymerisationsansätzen eine leichte Kontrolle der Polymerisationsreaktion und Insbesondere der Reaktionstemperatur ermöglichen. Die Gefahr des Auftretens eines nicht mehr kontrollierbaren Polymerisationsverlaufes ("Trommsdorff-Effekt") sollte bestmöglich vermieden werden.

Das Verfahren sollte auf einfache Art und Weise, großtechnisch und kostengünstig realisierbar sein. Weiterhin sollte es die radikalische Polymerisation mit hoher Reproduzierbarkeit ermöglichen.

Gelöst werden diese sowie weitere, nicht explizit genannte Aufgaben, die sich aus den einleitend diskutierten Zusammenhängen unmittelbar ableiten lassen, durch ein Verfahren zur radikalischen Polymerisation ethylenisch-ungesättigter Verbindungen mit allen Merkmalen des vorliegenden Patentanspruchs 1. Zweckmäßige Abwandlungen des erfindungsgemäßen Verfahrens werden in den auf Patentanspruch 1 rückbezogenen Unteransprüchen beschrieben.

Dadurch, dass man bei einem Verfahren zur radikalischen Polymerisation einer oder mehrerer ethylenisch-ungesättigter Verbindungen, bezogen auf das Gesamtgewicht der ethylenisch-ungesättigten Verbindungen, mindestens 80,0 Gew.-% der ethylenisch-ungesättigten Verbindungen vorlegt und mindestens einen Polymerisationsinitiator für die radikalische Polymerisation in mindestens zwei Schritten zugibt, wobei man im zweiten Schritt mehr Polymerisationsinitiator als im ersten Schritt zugibt und wobei man im zweiten Schritt, bezogen auf das Gesamtgewicht des im ersten

Schritts zugegebenen Polymerisationsinitiators, mindestens 120 % der im ersten Schritt zugegebenen Menge an Polymerisationsinitiator zugibt, gelingt es auf nicht vorhersehbare Weise ethylenisch-ungesättigte Verbindungen mit wesentlich verbesserter Raum/Zeit-Ausbeute radikalisch zu polymerisieren, welches wiederum eine deutliche Kapazitätssteigerung in Polymerisationsbetrieben ermöglicht.

Durch die erfindungsgemäße Vorgehensweise ergeben sich insbesondere die folgenden Vorteile:

➢ Das erfindungsgemäße Verfahren ermöglicht deutlich kürzere Polymerisationszeiten. Im Vergleich mit konventionellen Verfahren lassen sich die Polymerisationszeiten meist um mindestens 30-50% reduzieren.

➢ Ein besonderes, charakteristisches Merkmal des erfindungsgemäßen Verfahrens besteht darin, dass gerade zu Reaktionsbeginn schnelle Umsätze erzielt werden. So werden i. d. R. bereits nach 45 Minuten Reaktionszeit insgesamt 75 % der eingesetzten Monomermenge umgesetzt. Die hieraus resultierende Reaktionswärme kann zur Aufrechterhaltung der notwendigen Reaktionswärme genutzt werden, bzw. lässt sich bei Bedarf bequem abführen.

➢ Das erfindungsgemäße Verfahren ist nicht auf die Verwendung spezieller Rohstoffe, wie beispielsweise bestimmter Lösemittel, Kettenüberträger und/oder Polymerisationsinitiatoren, und/oder auf spezielle Polymerisationsverfahren, wie beispielsweise ATRP oder RAFT, beschränkt. Im Gegenteil, bei dem vorliegenden Verfahren können die herkömmlichen, im Zusammenhang mit der radikalischen Polymerisation Verbindungen eingesetzt werden.

➢ Das Eigenschaftsprofil der durch das erfindungsgemäße Verfahren erhältlichen Polymere, insbesondere ihr Molekulargewicht und ihre Molekulargewichtsverteilung, unterscheidet sich nicht wesentlich von dem herkömmlich hergestellter Polymerisate.

➢ Das erfindungsgemäße Verfahren erlaubt die radikalische Polymerisation von ethylenisch-ungesättigten Verbindungen mit hoher Reproduzierbarkeit.

➢ Das erfindungsgemäße Verfahren ermöglicht auch bei größeren Polymerisationsansätzen eine leichtere Kontrolle der Polymerisationsreaktion und insbesondere der Reaktionstemperatur. Die Gefahr des Auftretens eines nicht mehr kontrollierbaren Polymerisationsverlaufes ("Trommsdorff-Effekt") wird nahezu vollständig ausgeschlossen:

➢ Das erfindungsgemäße Verfahren eignet sich insbesondere für die radikalische Polymerisation von Monomerzusammensetzungen, welche mindestens ein (Meth)acrylat, Maleat und/oder Fumarat enthalten.

➢ Das erfindungsgemäße Verfahren ist auf einfache Art und Weise, großtechnisch und kostengünstig realisierbar.

➢ Ein weiterer Vorteil des erfindungsgemäßen Verfahrens besteht darin, dass sich die Menge des benötigten Polymerisationsinitiators im Vergleich zu herkömmlichen Verfahren reduzieren lässt. Gemäß dem erfindungsgemäßen Verfahren sind Initiatoreinsparungen von ca. 20-40 % realisierbar.

Erfindungsgemäß werden ethylenisch-ungesättigte Verbindungen radikalisch polymerisiert. Diese können einzein oder in Mischung eingesetzt werden.

Für die Zwecke der vorliegenden Erfindung besonders geeignete ethylenisch-ungesättigte Verbindungen umfassen Monomerzusammensetzungen, die mindestens ein (Meth)acrylat, Maleat und/oder Fumarat enthalten. Dabei können sich die Alkoholreste ggf. unterscheiden. Der Anteil des mindestens einen (Meth)acrylats, Maleats und/oder Fumarats beträgt, bezogen auf das Gesamtgewicht der Monomerzusammensetzung, vorzugsweise mindestens 25,0 Gew.-%, bevorzugt mindestens 50,0 Gew.-%, insbesondere mindestens 75,0 Gew.-%.

Der Ausdruck (Meth)acrytate umfasst Methacrylate und Acrylate sowie Mischungen aus beiden. Diese Monomere sind weithin bekannt. Hierbei kann der Alkylrest linear, cyclisch oder verzweigt sein.

Monomermischunge Im Rahmen der vorliegenden Erfindung enthalten, bezogen auf das Gesamtgewicht der ethylenisch-ungesättigten Verbindungen, 0,0 bis 40,0 Gew.-%, vorzugsweise 0,1 bis 35,0 Gew.-%, insbesondere 1,0 bis 20,0 Gew.-% einer oder mehrerer ethylenisch-ungesättigter Esterverbindungen der Formel (I)

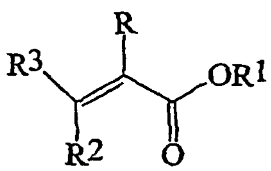

(I),

worin R Wasserstoff oder Methyl darstellt, $R^1$ einen linearen oder verzweigten Alkylrest mit 1 bis 5 Kohlenstoffatomen bedeutet, $R^2$ und $R^3$ jeweils unabhängig Wasserstoff oder eine Gruppe der Formel -COOR' darstellen, worin R' Wasserstoff oder eine Alkylgruppe mit 1 bis 5 Kohlenstoffatomen bedeutet.

Beispiele für Verbindungen der Formel (I) sind unter anderem (Meth)acrylate, Fumarate und Maleate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, tert.-Butyl(meth)acrylat und Pentyl(meth)acrylat; Cycloalkyl(meth)acrylate, wie Cyclopentyl(meth)acrylat; (Meth)acrylate, die sich von ungesättigten Alkoholen ableiten, wie 2-Propinyl(meth)acrylat, Allyl(meth)acrylat und Vinyl(meth)acrylat.

Als weiteren Bestandteil enthalten die Monomerzusammensetzungen, bezogen auf das Gesamtgewicht der ethylenisch-ungesättigten Verbindungen, 60,0 bis 100,0 Gew.-%, vorzugsweise 65,0 bis 99,9 Gew.-%, insbesondere 80,0 bis 99,9 Gew.-% einer oder mehrerer ethylenisch-ungesättigter Esterverbindungen der Formel (II)

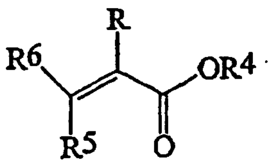

(II);

worin R Wasserstoff oder Methyl darstellt, $R^4$ einen linearen oder verzweigten Alkylrest mit 6 bis 40 Kohlenstoffatomen bedeutet, $R^5$ und $R^6$ unabhängig Wasserstoff oder eine Gruppe der Formel -COOR" darstellen, warin R" Wasserstoff oder eine Alkylgruppe mit 6 bis 40 Kohlenstoffatomen bedeutet.

Zu diesen gehören unter anderem

(Meth)acrylate, Fumarate und Maleate, die sich von gesättigten Alkoholen ableiten, wie Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propylheptyl(meth}acrylat, Nonyl(meth)acrylat, Decyl(meth)acrylat, Undecyl(meth)acrylat, 5-Methylundecyl(meth)acrylat, Dodecyl(meth)acrylat,

2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, Heptadecyl(meth)acrylat, 5-iso-Propylheptadecyl(meth)acrylat,

4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat Stearyleicosyl(meth)acrylat, Docosyl(meth)acrylat und/oder Eicosyltetratriacontyl(meth)acrylat;

Cycloalkyl(meth)acrylate, wie 2,4,5-Tri-t-Butyl-3-Vinylcyclohexyl(meth)acrylat, 2,3,4,5-Tetra-t-Butylcyclohexyl(meth)acrylat;

(Meth)acrylate, die sich von ungesättigten Alkoholen ableiten, wie z. B. Oleyl(meth)acrylat;

Cycloalkyl(meth)acrylate, wie 3-Vinylcyclohexyl(meth)acrylat, Cyclohexyl(meth)acrylat, Bornyl(meth)acrylat; sowie die entsprechenden Fumarate und Maleate.

Die Esterverbindungen mit langkettigem Alkoholrest, insbesondere die Verbindungen gemäß der Formel (II), lassen sich beispielsweise durch Umsetzen von (Meth)acrylaten, Fumaraten, Maleaten und/oder den entsprechenden Säuren mit langkettigen Fettalkoholen erhalten, wobei im Allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911 und Oxo Alcohol® 7900, Oxo Alcohol® 1100; Alfol® 610, Alfol® 810, Lial® 125 und Nafol®-Typen (Sasol Olefins & Surfactant GmbH); Alphanol® 79 (ICI);; Epal® 610 und Epal® 810 (Ethyl Corporation); Linevol® 79, Linevol® 911 und Neodol® 25E (Shell AG); Dehydad®, Hydrenol®- und Lorol®-Typen (Cognis); Acropol® 35 und Exxal® 10 (Exxon Chemicals GmbH); Kalcol 2465 (Kao Chemicals).

Von den ethylenisch-ungesättigten Esterverbindungen sind die (Meth)acrylate gegenüber den Maleaten und Fumaraten besonders bevorzugt, d.h. $R^2$, $R^3$, $R^5$ und $R^6$ der Formeln (I) und (II) stellen in besonders bevorzugten Ausführungsformen Wasserstoff dar. Weiterhin werden die Methacrylate gegenüber den Acrylaten bevorzugt.

Erfindungsgemäß werden Monomerzusammensetzungen von langkettigen Alkyl(meth)acrylaten gemäß Formel (II) eingesetzt, wobei die Monomerzusammensetzungen mindestens ein (Meth)acrylat mit 6 bis 15 Kohlenstoffatomen im Alkoholrest sowie mindestens ein (Meth)acrylat mit 16 bis 40 Kohlenstoffatomen im Alkoholrest aufweisen. Vorzugsweise liegt der Anteil der (Meth)acrylate mit 6 bis 15 Kohlenstoffatomen im Alkoholrest im Bereich von 20,0 bis 95,0 Gew.-%, bezogen auf das Gewicht der Monomerzusammensetzung. Der Anteil der (Meth)acrylate mit 16 bis 40 Kohlenstoffatomen im Alkoholrest liegt vorzugsweise im Bereich von 0,5 bis 60,0 Gew.-%, bezogen auf das Gewicht der Monomerzusammensetzung.

Gemäß einem weiteren Aspekt der vorliegenden Erfindung ist der Anteil an olefinisch ungesättigten Estern mit 8 bis 14 Kohlenstoffatomen vorzugsweise größer oder gleich dem Anteil an olefinisch ungesättigten Estern mit 16 bis

18 Kohlenstoffatomen.

Die Monomerzusammensetzung umfasst weiterhin günstigerweise ein oder mehrere ethylenisch-ungesättigte Comonomere, die sich mit den ethylenisch-ungesättigten Esterverbindungen der Formeln (I) und/oder (II) copolymerisieren lassen, von diesen jedoch verschieden sind. Der Anteil der Comonomere liegt bevorzugt im Bereich von 0,0 bis 40,0 Gew.-%, insbesondere 2,0 bis 35,0 Gew.-% und besonders bevorzugt 5,0 bis 30,0 Gew.-%, bezogen auf das Gewicht der Monomerenzusammensetzung.

In diesem Zusammenhang besonders geeignete Comonomere entsprechen der Formel (III):

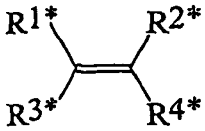

(III)

worin $R^{1*}$ und $R^{2*}$ jeweils unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+1) Halogenatomen substituiert sein können, wobei n die Zahl der Kohlenstoffatome der Alkylgruppe ist (beispielsweise $CF_3$), $\alpha$, $\beta$- ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise $CH_2$=CCl-, ist, Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; Arylgruppen mit 6 bis 24 Kohlenstoffatomen, welche mit 1 bis (2n-1) Halogenatomen, vorzugsweise Chlor, und/oder Alkylgruppen mit 1 bis 6 Kohlenstoffatomen substituiert sein können, wobei n die Zahl der Kohlenstoffatome der Arylgruppe ist; C(=Y*)$R^{5*}$, C(=Y*)$NR^{6*}R^{7*}$, Y*C(=Y*)$R^{5*}$, $SOR^{5*}$, $SO_2R^{5*}$, $OSO_2R^{5*}$, $NR^{8*}SO_2R^{5*}$, $PR^{5*}_2$, P(=Y*)$R^{5*}_2$, Y*$PR^{5*}_2$, Y*P(=Y*)$R^{5*}_2$, $NR^{8*}_2$ welche mit einer zusätzlichen $R^{8*}$-, Aryl- oder Heterocyclyl-Gruppe quatemärisiert sein kann, wobei Y* $NR^{8*}$, S oder O, vorzugsweise O sein kann; $R^{5*}$ eine Alkylgruppe mit 1 bis 20 Kohlenstoffatomen, eine Alkylthio mit 1 bis 20 Kohlenstoffatomen, $OR^{15}$ ($R^{15}$ ist Wasserstoff oder ein Alkalimetall), Alkoxy von 1 bis 20 Kohlenstoffatomen, Aryloxy oder Heterocyklyloxy ist; $R^{6*}$ und $R^{7*}$ unabhängig Wasserstoff oder eine Alkylgruppe mit 1 bis 20 Kohlenstoffatomen sind, oder $R^{6*}$ und $R^{7*}$ können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und $R^{8*}$ Wasserstoff, lineare oder verzweigte Alkyl- oder Arylgruppen mit 1 bis 20 Kohlenstoffatomen sind;

worin $R^{3*}$ und $R^{4*}$ unabhängig ausgewählt aus der Gruppe bestehend aus Wasserstoff, Halogen (vorzugsweise Fluor oder Chlor), Alkylgruppen mit 1 bis 6 Kohlenstoffatomen und CO0$R^{9*}$, worin $R^{9*}$ Wasserstoff, ein Alkalimetall oder eine Alkylgruppe mit 1 bis 40 Kohlenstoffatomen ist, sind, oder $R^{3*}$ und $R^{4*}$ können zusammen eine Gruppe der Formel $(CH_2)_{n'}$, welche mit 1 bis 2n' Halogenatomen oder $C_1$ bis $C_4$ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste $R^{1*}$, $R^{2*}$, $R^3$ und $R^{4*}$ Wasserstoff oder Halogen sind.

Hierzu gehören unter anderem:

Aryl(meth)acrylate, wie Benzylmethacrylat oder Phenylmethacrylat, wobei die Arylreste jeweils unsubstituiert oder bis zu vierfach substituiert sein können;
Methacrylate von halogenierten Alkoholen, wie
2,3-Dibromopropylmethacrylat,
4-Bromophenylmethacrylat,
1,3-Dichloro-2-propylmethacrylat,
2-Bromoethylmethacrylat,
2-Iodoethylmethacrylat,
Chloromethylmethacrylat;
Vinylhalogenide, wie beispielsweise Vinylchlorid, Vinylfluorid, Vinylidenchlorid und Vinylidenfluorid;
Vinylester, wie Vinylacetat;
Styrol, substituierte Styrole mit einem Alkylsubstituenten in der Seitenkette, wie z. B. $\alpha$-Methylstyrol und $\alpha$-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam,

N-Vinylbutyrolactam, Vinyloxolan, Vinylfuran, Vinyloxazole und hydrierte Vinyloxazole;
Vinyl- und isoprenylether;
Maleinsäure und Maleinsäurederivate, wie beispielsweise Maleinsäureanhydrid, Methylmaleinsäureanhydrid, Maleinimid, Methylmaleinimid;
Fumarsäure und Fumarsäurederivate;
Acrylsäure und (Meth)acrylsäure;
Diene wie beispielsweise Divinylbenzol.
Hydroxyalkyl(meth)acrylate, wie
3-Hydroxypropylmethacrylat,
3,4-Dihydroxybutylmethacrylat,
2-Hydroxyethylmethacrylat,
2-Hydroxypropylmethacrylat,
2,5-Dimethyl-1,6-hexandiol(meth)acrylat,
1,10-Decandiol(meth)acrylat;
carbonylhaltige Methacrylate, wie
2-Carboxyethylmethacrylat,
Carboxymethylmethacrylat,
Oxazolidinylethylmethacrylat,
N-(Methacryloyloxy)formamid,
Acetonylmethacrylat,
N-Methacryloylmorpholin,
N-Methacryloyl-2-pyrrolidinon,
N-(2-Methacryloyloxyethyl)-2-pyrrolidinon,
N-(3-Methacryloyloxypropyl)-2-pyrrolidinon,
N-(2-Methacryloyloxypentadecyl)-2-pyrrolidinon,
N-(3-Methacryloyloxyheptadecyl)-2-pyrrolidinon;
Glycoldimethacrylate, wie
1,4-Butandiolmethacrylat,
2-Butoxyethylmethacrylat,
2-Ethoxyethoxymethylmethacrylat,
2-Ethoxyethylmethacrylat;
Methacrylate von Etheralkoholen, wie
Tetrahydrofurfurylmethacrylat,
Vinyloxyethoxyethylmethacrylat,
Methoxyethoxyethylmethacrylat,
1-Butoxypropylmethacrylat,
1-Methyl-(2-Vinyloxy)-Ethylmethacrylat,
Cyclohexyloxymethylmethacrylat,
Methoxymethoxyethylmethacrylat,
Benzyloxymethylmethacrylat,
Furfurylmethacrylat,
2-Butoxyethylmethacrylat,
2-Ethoxyethoxymethylmethacrylat,
2-Ethoxyethylmethacrylat,
Allyloxymethylmethacrylat,
1-Ethoxybutylmethacrylat,
Methoxymethylmethacrylat,
1-Ethoxyethylmethacrylat,
Ethoxymethylmethacrylat und ethoxylierte (Meth)acrylate, die bevorzugt 1 bis 20, insbesondere 2 bis 8 Ethoxygruppen aufweisen;
Aminoalkyl(meth)acrylate und Aminoalkyl(meth)acrylatamide, wie N-(3-Dimethylaminopropyl)methacrylamid,
Dimethylaminopropylmethacrylat,
3-Diethylaminopentylmethacrylat,
3-Dibutylaminohexadecyl(meth)acrylat;
Nitrile der (Meth)acrylsäure und andere stickstoffhaltige Methacrylate, wie N-(Methacryloyloxyethyl)diisobutylketimin,
N-(Methacryloyloxyethyl)dihexadecylketimin,
Methacryloylamidoacetonitril,

2-Methacryloyloxyethylmethylcyanamid,
Cyanomethylmethacrylat;
heterocyclische (Meth)acrylate, wie
2-(1-Imidazolyl)ethyl(meth)acrylat,
2-(4-Morpholinyl)ethyl(meth)acrylat und
1-(2-Methacryloyloxyethyl)-2-Pyrrolidon;
Oxiranylmethacrylate, wie
2,3-Epoxybutylmethacrylat,
3,4-Epoxybutylmethacrylat,
10,11-Epoxyundecylmethacrylat,
2,3-Epoxycyclohexylmethacrylat,
10,11-Epoxyhexadecylmethacrylat;
Glycidylmethacrylat;

Diese Monomere können einzeln oder als Mischung eingesetzt werden.

Bei dem efindungsgemäßen Verfahren werden, bezogen auf das Gesamtgewicht der ethylenisch-ungesättigten Verbindungen, mindestens 80,0 Gew.-%, vorzugsweise mindestens 85,0 Gew.-%, günstigerweise mindestens 90,0 Gew.-%, besonders bevorzugt mindestens 95,0 Gew.-%, insbesondere mindestens 99,0 Gew.-%, der ethylenisch-ungesättigten Verbindungen vorgelegt.

Gemäß einer besonders bevorzugten Ausführungsform der vorliegenden Erfindung wird nicht die Gesamtmenge der verwendeten Monomere sondern nur ein Teil, vorzugsweise 85,0 - 99,9 Gew.-% der Gesamtmenge der ethylenisch-ungesättigten Monomere, in die Vorlage gegeben und ein geringer Teil der verwendeten Monomere, vorzugsweise 0,1 - 15,0 Gew.%, bezogen auf die Gesamtmonomermenge, wird gegen Ende des Prozesses zuzugeben.

Werden zu Reaktionsbeginn zum größten Teil oder ausschließlich Alkylmethacrylate eingesetzt, so empfiehlt sich die Zugabe von Alkylacrylaten, vorzugsweise von 2,0 - 5,0 Gew.-%, bezogen auf die Gesamtmonomermenge, ebenso gegen Ende der Polymerisation mit dem Hintergrund, dass niedrige Restmonomergehalte erhalten werden.

Die radikalische Polymerisation der ethylenisch-ungesättigten Verbindungen kann auf an sich bekannte Weise erfolgen. Die übliche freie radikalische Polymerisation ist u.a. in Ullmanns's Encyclopedia of Industrial Chemistry, Sixth Edition dargelegt.

Im Rahmen der vorliegenden Erfindung wird die Polymerisation unter Verwendung mindestens eines Polymerisationsinitiators für die radikalische Polymerisation gestartet. Hierzu gehören unter anderem die in der Fachwelt weithin bekannten Azoinitiatoren, wie 2,2'-Azobisisobutyronitril, 2,2'-Azobis-(2,4-dimethylvaleronitril) und 1,1-Azobiscyclohexancarbonitril, organische Peroxide, wie Dicumylperoxid, Diacylperoxide, wie Dilauroylperoxid, Peroxydicarbonate, wie Diisopropylperoxydicarbonat, Perester, wie tert. Butylperoxy-2-ethylhexanoat, und dergleichen.

Für die Zwecke der vorliegenden Erfindung ganz besonders geeignete Polymerisationsinitiatoren umfassen insbesondere die folgenden Verbindungen:

Methylethylketonperoxid,
Acetylacetonperoxid,
Dilauroylperoxid,
tert.-Butylper-2-ethylhexanoat,
Ketonperoxid,
tert-Butylperoctoat,
Methylisobutylketonperoxid,
Cyclohexanonperoxid,
Dibenzoylperoxid,
tert.-Butylperoxybenzoat,
tert.-Butylperoxyisopropylcarbonat,
2,5-Bis-(2-ethylhexanoyl-peroxy)-2,5-dimethylhexan,
tert.-Butylperoxy-2-ethylhexanoat,
tert.-Butylperoxy-3,5,5-trimethylhexanoat,
Dicumylperoxid,
1,1-Bis-(tert.-butylperoxy)-cyclohexan,
1,1-Bis-(tert.-butylperoxy)-3,3,5-trimethylcyclohexan,
Cumylhydroperoxid,
tert.-Butylhydroperoxid,
Bis-(4-tert.-butylcyclohexyl)-peroxydicarbonat,
2,2'-Azobisisobutyronitril,

2,2'-Azobis-(2,4-dimethylvaleronitril),
1,1-Azobiscyclohexancarbonitril,
Diisopropylperoxydicarbonat,
tert. Amylperoxypivalat,
Di-(2,4-dichlorbenzoyl)-peroxid,
tert. Butylperoxypivalat,
2,2'-Azobis-(2-amidinopropane)-dihydrochlorid,
Di-(3,5,5-trimethyl-hexanoyl)-peroxid,
Dioctanoylperoxid,
Didecanoylperoxid,
2,2'-Azobis-(N,N'-dimethylenisobutyramidin)
Di-(2-methylbenzoyl)-peroxid,
Dimethyl-2,2'-azobisisobutyrat,
2,2'Azobis-(2-methylbutyronitril),
2,5-Dimethyl-2,5-di-(2-ethylhexanoylperoxy)-hexan,
4,4'-Azobis-(cyanopentansäure)
Di-(4-methylbenzoyl)-peroxid,
Dibenzoylperoxid,
tert. Amylperoxy-2-ethylhexanoat,
tert. Butylperoxy-2-ethylhexanoat,
tert. Butylperoxy-isobutyrat

sowie Mischungen der zuvor genannten Polymerisationsinitiatoren.

Erfindungsgemäß werden Polymerisationsinitiatoren mit einer Halbwertszeit von.1 Stunde bei einer Temperatur im Bereich von 25 °C bis 200 °C, vorzugsweise im Bereich von 50° C bis 150 °C, insbesondere im Bereich von 50°C bis 100°C, ganz besonders bevorzugt. Weiterhin sind peroxidische Polymerisationsinitiatoren, insbesondere tert-Butylperoctoat, für die vorliegenden Zwecke ganz besonders geeignet.

Je nach Ausführungsform können auch verschiedene Polymerisationsinitiatoren eingesetzt werde. Werden verschiedene Initiatorspezies eingesetzt, so werden diese vorzugsweise getrennt in aufeinander folgenden Schritten zugegeben, wobei der später zugegebene Polymerisationsinitiator zweckmäßigerweise eine höhere Halbwertszeit gegenüber dem zuvor zugegebenen Polymerisationsinitiator besitzen sollte.

Bei dem erfindungsgemäßen Verfahren erfolgt die Zugabe des mindestens einen Polymerisationsinitiators für die radikalische Polymerisation in mindestens zwei Schritten. Dabei kann die Zugabe des Polymerisationsinitiators in jedem Schritt in unverdünnter Form oder in verdünnter Form, vorzugsweise in einem Lösungsmittel gelöst, insbesondere in Form einer 3 bis 25 Gew.-%igen Lösung in mindestens einem Mineralöl, erfolgen.

Gemäß einer ersten, besonders bevorzugten Ausführungsform der vorliegenden Erfindung wird der Polymerisationsinitiator im ersten Schritt vorzugsweise auf einmal zugegeben. Es hat sich jedoch auch als ganz besonders zweckmäßig erwiesen, den Polymerisationsinitiator im ersten Schritt, vorzugsweise kontinuierlich, insbesondere mit einer konstanten Dosierrate, zuzudosieren.

Im zweiten Schritt wird der Polymerisationsinitiator gemäß einer ersten besonders bevorzugten Ausführungsform der vorliegenden Erfindung vorzugsweise auf einmal zugegeben. Alternativ ist es jedoch auch bevorzugt, den Polymerisationsinitiator im zweiten Schritt, vorzugsweise kontinuierlich, insbesondere mit einer konstanten Dosierrate, zuzudosieren. Gemäß einer ganz besonders bevorzugten Ausführungsform der vorliegenden Erfindung wird der Polymerisationsinitiator im ersten und im zweiten Schritt kontinuierlich, günstigerweise mit jeweils einer konstanten Dosierrate, zudosiert, wobei die mittlere Dosierrate des zweiten Schrittes größer als die mittlere Dosierrate des ersten Schrittes ist. Das Verhältnis der mittleren Dosierrate des zweiten Schrittes zu der mittleren Dosierrate des ersten Schrittes ist größer 1,2:1, bevorzugt im Bereich von 1,2:1 bis 10:1, besonders bevorzugt größer 1,5:1, ganz besonders bevorzugt größer 2:1, insbesondere größer 3:1.

Efindungsgemäß ist die im zweiten Schritt zugegebene Menge an Polymerisationsinitiator größer als die im ersten Schritt zugegebene Menge, wobei man im zweiten Schritt, bezogen auf das Gesamtgewicht des im ersten Schritts zugegebenen Polymerisationsinitiators, mindestens 120 %, zweckmäßigerweise 120 % bis 1000 %, besonders bevorzugt mindestens 150 %, insbesondere 150 % bis 500 %, der im ersten Schritt zugegebenen Menge an Polymerisationsinitiator zugibt.

Man beginnt den zweiten Schritt vorzugsweise zu einem Zeitpunkt, bei welchem 0,01 bis 50,0 %, zweckmäßigerweise 10,0 bis 40,0 %, insbesondere 15,0 bis 35,0 Gew.-%, der Gesamtmenge des während dem ersten Schritt zugegebenen Polymerisationsinitiators noch nicht verbraucht sind.

Dieser Anteil an noch nicht verbrauchtem Polymerisationsinitiator kann auf an sich bekannte Weise bestimmt oder auf der Grundlage der an sich bekannten Größen, wie beispielsweise der Zerfallskonstante des Polymerisationsinitiators, des Temperaturprofils während der Polymerisation und des Zugabeprofils, berechnet werden. Für eine Zudosierung mit konstanter Geschwindigkeit bei einer konstanten Temperatur gilt beispielsweise näherungsweise:

$$I_{ss}/I_{\Sigma} = 1/(k_d\ t_{\Sigma})$$

wobei der Quotient $I_{ss}/I_{\Sigma}$ den Anteil des noch nicht verbrauchten Polymerisationsinitiators bezogen auf die Gesamtmenge des während dem ersten Schritt zugegebenen Polymerisationsinitiators bezeichnet, wobei $k_d$ die Zerfallskonstante des Polymerisationsinitiators ist und wobei $t_{\Sigma}$ die Dauer der Zudosierung ist.

Für die Zwecke der vorliegenden Erfindung hat es sich als ganz besonders günstig erwiesen, den Polymerisationsinitiator in mindestens drei Schritten zuzugeben, wobei man im dritten Schritt mehr Initiator als im ersten und als im zweiten Schritt zugibt. Im dritten Schritt erfolgt die Polymerisationsinitiator-Zugabe zweckmäßigerweise auf einmal. Alternativ ist es auch bevorzugt, den Polymerisationsinitiator im dritten Schritt, vorzugsweise kontinuierlich, insbesondere mit einer konstanten Dosierrate, zuzudosieren. Gemäß einer ganz besonders bevorzugten Ausführungsform der vorliegenden Erfindung wird der Polymerisationsinitiator im ersten, im zweiten und im dritten Schritt kontinuierlich, günstigerweise mit jeweils einer konstanten Dosierrate, zudosiert, wobei die mittlere Dosierrate des drittes Schrittes vorzugsweise größer als die mittlere Dosierrate des zweiten Schrittes und die mittlere Dosierrate des zweiten Schrittes vorzugsweise größer als die mittlere Dosierrate des ersten Schrittes ist. Vorzugsweise ist das Verhältnis der mittleren Dosierrate des dritten Schrittes zu der mittleren Dosierrate des zweiten Schrittes größer 1,2:1, bevorzugt im Bereich von 1,2:1 bis 10:1, besonders bevorzugt größer 1,5:1, ganz besonders bevorzugt größer 2:1, insbesondere größer 3:1.

Erfindungsgemäß ist die im dritten Schritt zugegebene Menge an Polymerisationsinitiator vorzugsweise größer als die im zweiten Schritt zugegebene Menge, wobei man im dritten Schritt, bezogen auf das Gesamtgewicht des im zweiten Schritts zugegebenen Polymerisationsinitiators, vorzugsweise mindestens 120 %, zweckmäßigerweise 120 % bis 1000 %, besonders bevorzugt mindestens 150 %, insbesondere 150 % bis 500 % der im zweiten Schritt zugegebenen Menge an Polymerisationsinitiator zugibt.

Man beginnt den dritten Schritt vorzugsweise zu einem Zeitpunkt, bei welchem 0,01 bis 50,0 %, zweckmäßigerweise 10,0 bis 40,0 %, insbesondere 15,0 bis 35,0 Gew.-%, der Gesamtmenge des während dem zweiten Schritt zugegebenen Polymerisationsinitiators noch nicht verbraucht sind.

Dieser Anteil an noch nicht verbrauchtem Polymerisationsinitiator kann auf an sich bekannte Weise bestimmt oder auf der Grundlage der an sich bekannten Größen, wie beispielsweise der Zerfallskonstante des Polymerisationsinitiators, des Temperaturprofils während der Polymerisation, des Zugabeprofils, berechnet werden. Für eine Zudosierung mit konstanter Geschwindigkeit bei einer konstanten Temperatur gilt beispielsweise näherungsweise:

$$I_{ss}/I_{\Sigma} = 1/(k_d\ t_{\Sigma})$$

wobei der Quotient $I_{ss}/I_{\Sigma}$ den Anteil des noch nicht verbrauchten Polymerisationsinitiators bezogen auf die Gesamtmenge des während dem zweiten Schritt zugegebenen Polymerisationsinitiators bezeichnet, wobei $k_d$ die Zerfallskonstante des Polymerisationsinitiators ist und wobei $t_{\Sigma}$ die Dauer der Zudosierung ist.

Gemäß einer besonders bevorzugten Ausführungsform der Erfindung erfolgt die Polymerisationsinitiator-Zugabe in mehr als drei Schritten, wobei man ab dem vierten Schritt bei jedem nachfolgendem Schritt mehr Polymerisationsinitiator als in dem unmittelbar vorhergehenden Schritt zugibt und den Polymerisationsinitiator auf einmal zugibt oder kontinuierlich, vorzugsweise mit konstanter Dosierrate zudosiert.

Im Rahmen der vorliegenden Erfindung hat es sich als ganz besonders günstig erwiesen, den Polymerisationsinitiator mit kontinuierlich ansteigender Dosiergeschwindigkeit zuzudosieren. Dies entspricht einer Zugabe kontinuierlich ansteigender Polymerisationsinitiator-Mengen in unendlich vielen Schritten.

Das erfindungsgemäße Verfahren erlaubt eine schnelle und überaus effektive Polymerisation ethylenisch-ungesättigter Verbindungen und führt zu Polymerisaten mit vergleichbar geringen Restmonomergehalten. Dennoch hat es sich gelegentlich als überaus günstig erwiesen, gegen Ende der Reaktion nachzuinitiieren, um den Restmonomergehalt der Reaktionsmischung noch weiter zu senken. Die Nachinitiierung erfolgt vorzugsweise zu einem Zeitpunkt, bei welchem mindestens 75,0 Gew.-%, zweckmäßigerweise mindestens 90,0 Gew.-%, insbesondere mindestens 95,0 Gew.-%, der Gesamtmenge des während des letzten Schrittes zugegebenen Polymerisationsinitiators verbraucht sind. Es wird vorzugsweise mit 0,1 Gew.-% bis 100,0 Gew.-%, insbesondere mit 5,0 Gew.-% bis 50,0 Gew.-% Polymerisationsinitiator, bezogen auf die Gesamtmenge an zuvor zugegebenen Polymerisationsinitiator nachdosiert.

Das neue Verfahren kann entweder in An- oder Abwesenheit eines Kettenüberträgers durchgeführt werden. Als Kettenüberträger können typische, für radikalische Polymerisationen beschriebene Spezies eingesetzt werden, wie sie dem Fachmann bekannt sind.

Insbesondere empfiehlt sich ein Einsatz von Mercaptanen, wie beispielsweise n-Butylmercaptan, n-Dodecylmercaptan, 2-Mercaptoethanol, 2- Ethylhexylthioglycolat oder Pentaerythrittetrathioglycolat; wobei der Kettenüberträger vorzugsweise in Mengen von 0,05 bis 5,0 Gew.-%, bevorzugt in Mengen von 0,1 bis 2,0 Gew.-% und besonders bevorzugt in Mengen von 0,2 bis 1,0 Gew.-%, jeweils bezogen auf die Gesamtmasse der ethylenisch-ungesättigten Verbindungen, eingesetzt wird. In diesem Zusammenhang kann der Fachmann der Fachliteratur, insbesondere den Druckschriften H. Rausch-Puntigam, T. Völker "Acryl- und Methacrylverbindungen" Springer, Heidelberg, 1967; Houben-Weyl "Methoden der organischen Chemie" Bd. XIV/1, S. 66ff., Georg Thieme, Heidelberg, 1961 und Kirk-Othmer "Encyclopedia of Chemical Technology" Vol. 1, S. 296ff., J. Wiley, New York, 1978, entnehmen. Im Rahmen der vorliegenden Erfindung wird die Verwendung von n-Dodecylmercaptan als Kettenüberträger ganz besonders bevorzugt.

Die Polymerisation kann mit oder ohne Lösungsmittel durchgeführt werden. Der Begriff des Lösungsmittels ist hierbei weit zu verstehen.

Vorzugsweise wird die Polymerisation in einem organischen Lösungsmittel, insbesondere in einem unpolaren Lösungsmittel durchgeführt. Hierzu gehören Kohlenwasserstofflösungsmittel, wie beispielsweise aromatische Lösungsmittel, wie Toluol, Benzol und Xylol, gesättigte Kohlenwasserstoffe, wie beispielsweise Cyclohexan, Heptan, Octan, Nonan, Decan, Dodecan, die auch verzweigt vorliegen können. Diese Lösungsmittel können einzeln sowie als Mischung verwendet werden. Besonders bevorzugte Lösungsmittel sind Mineralöle, natürliche Öle und synthetische Öle sowie Mischungen hiervon. Von diesen sind Mineralöle ganz besonders bevorzugt.

Mineralöle sind an sich bekannt und kommerziell erhältlich. Sie werden im Allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im Allgemeinen liegt der Siedepunkt von Mineralöl höher als 200 °C, vorzugsweise höher als 300 °C, bei 5000 Pa. Die Herstellung durch Schwelen von Schieferöl, Verkoken von Steinkohle, Destillation unter Luftabschluß von Braunkohle sowie Hydrieren von Stein- oder Braunkohle ist ebenfalls möglich. Zu einem geringen Anteil werden Mineralöle auch aus Rohstoffen pflanzlichen (z. B. aus Jojoba, Raps) od. tierischen (z. B. Klauenöl) Ursprungs hergestellt. Dementsprechend weisen Mineralöle, je nach Herkunft unterschiedliche Anteile an aromatischen, cyclischen, verzweigten und linearen Kohlenwasserstoffen auf.

Im Allgemeinen unterscheidet man paraffinbasische, naphthenische und aromatische Anteile in Rohölen bzw. Mineralölen, wobei die Begriffe paraffinbasischer Anteil für längerkettig bzw. stark verzweigte iso-Alkane und naphtenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen bedingt polare Eigenschaften zugesprochen werden. Die Zuordnung ist jedoch schwierig, da einzelne Alkanmoleküle sowohl langkettig verzweigte Gruppen als auch Cycloalkanreste und aromatische Anteile aufweisen können. Für die Zwecke der vorliegenden Erfindung kann die Zuordnung beispielsweise gemäß DIN 51 378 erfolgen. Polare Anteile können auch gemäß ASTM D 2007 bestimmt werden.

Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im Allgemeinen jeweils im Bereich von 0 bis 40 Gew.-%. Gemäß einem interssanten Aspekt umfasst das Mineralöl hauptsächlich naphtenische und paraffinbasische Alkane, die im Allgemeinen mehr als 13, bevorzugt mehr als 18 und ganz besonders bevorzugt mehr als 20 Kohlenstoffatome aufweisen. Der Anteil dieser Verbindungen ist im Allgemeinen $\geq$ 60 Gew.-%, vorzugsweise $\geq$ 80 Gew.-%, ohne dass hierdurch eine Beschränkung erfolgen soll. Ein bevorzugtes Mineralöl enthält 0,5 bis 30 Gew.-% aromatische Anteile, 15 bis 40 Gew.-% naphthenische Anteile, 35 bis 80 Gew.-% paraffinbasische Anteile, bis zu 3 Gew.-% n-Alkane und 0,05 bis 5 Gew.-% polare Verbindungen, jeweils bezogen auf das Gesamtgewicht des Mineralöls.

Eine Analyse von besonders bevorzugten Mineralölen, die mittels herkömmlicher Verfahren, wie Harnstofftrennung und Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen:

n-Alkane mit ca. 18 bis 31 C-Atome:

0,7 - 1,0 %,

gering verzweigte Alkane mit 18 bis 31 C-Atome:

1,0 - 8,0 %,

Aromaten mit 14 bis 32 C-Atomen:

0,4 - 10,7 %,

Iso- und Cyclo-Alkane mit 20 bis 32 C-Atomen:

60,7- 82,4 %,

polare Verbindungen:

0,1 - 0,8 %,

Verlust:

6,9 - 19,4 %.

Wertvolle Hinweise hinsichtlich der Analyse von Mineralölen sowie eine Aufzählung von Mineralölen, die eine abweichende Zusammensetzung aufweisen, findet sich beispielsweise in Ullmanns Encyclopedia of Industrial Chemistry, 5th Edition on CD-ROM, 1997, Stichwort "lubricants and related products".

Synthetische Öle umfassen unter anderem organische Ester, beispielsweise Diester und Polyester, Polyalkylenglykole, Polyether, synthetische Kohlenwasserstoffe, insbesondere Polyolefine, von denen Polyalphaolefine (PAO) bevorzugt sind, Silikonöle und Perfluoralkylether. Sie sind meist etwas teurer als die mineralischen Öle, haben aber Vorteile hinsichtlich ihrer Leistungsfähigkeit.

Natürliche Öle sind tierische oder pflanzliche Öle, wie beispielsweise Klauenöle oder Jojobaöle.

Diese Öle können auch als Mischungen eingesetzt werden und sind vielfach kommerziell erhältlich.

Im Rahmen einer ganz besonders bevorzugten Ausführungsform der vorliegenden Erfindung wird die Polymerisation jedoch ohne Lösungsmittel durchgeführt. Diese Verfahrensvariante eignet sich insbesondere für die Herstellung vergleichsweise niedermolekularer Polymerisate, welche vorzugsweise ein Zahlenmittel des Molekulargewichtes kleiner 50.000 g/mol, bevorzugt kleiner 25.000 g/mol, insbesondere im Bereich von 5.000 bis 20.000 g/mol, aufweisen.

Die Polymerisation kann bei Normaldruck, Unter- oder Überdruck durchgeführt werden. Auch die Polymerisationstemperatur ist unkritisch. Im Allgemeinen liegt sie jedoch im Bereich von -20° - 200°C, vorzugsweise im Bereich von 0° - 180°C, günstigerweise im Bereich von 50° - 180°C, besonders bevorzugt im Bereich von 50° - 130°C, und insbesondere im Bereich von 60° - 120°C.

Die Polymerisation wird vorzugsweise bei einer konstanten Reaktionstemperatur durchgeführt, welche während der gesamten Polymerisationsreaktion vorzugsweise um weniger als +- 20 °C, besonders bevorzugt um weniger als +- 10 °C, insbesondere um weniger als +- 5°C, um die gewünschte Temperatur schwankt.

Zu diesem Zweck wird das Polymerisationsgefäß vorzugsweise mit einem Medium umgeben, welches die entstehende Polymerisationswärme möglichst rasch und gut abführen kann. Zur weiteren Verringerung von Temperaturschwankungen hat es sich als überaus günstig erwiesen, die Temperatur im Polymerisationsgefäß durch die Zugabegeschwindigkeit des Polymerisationsinitiators zu steuern, indem man zur Temperaturerhöhung die Zugabegeschwindigkeit des Polymerisationsinitiators kurzzeitig erhöht und zur Temperaturverringerung die Zugabegeschwindigkeit des Polymerisationsinitiators kurzzeitig erniedrigt.

Weiterhin wird günstigerweise derart verfahren, dass man die die ethylenisch-ungesättigten Verbindungen umfassende Reaktionsmischung in einem Reaktionsgefäß vorlegt, die Reaktionsmischung unter Verwendung eines geeigneten Temperiermediums bei der gewünschten Polymerisationstemperatur solange temperiert, bis die Reaktionsmischung die gewünschte Polymerisationstemperatur aufweisen, die Polymerisation durch Zugabe oder Zudosierung des Polymerisationsinitiators startet und direkt nach der Zugabe oder direkt nach dem Beginn der Zudosierung des Polymerisationsinitiators die Temperatur des Temperiermediums gegenüber der zuvor eingestellten Temperatur, vorzugsweise um 2 bis 10 °C, insbesondere um 5 bis 10 °C, erniedrigt.

Im Rahmen der vorliegenden Erfindung wählt man die Mengen an Monomeren, Polymerisationsinitiator, Kettenüberträger und Lösungsmittel vorzugsweise derart, dass ein Gewichtsmittel des Molekulargewichtes im Bereich von 2.000 und 5.000.000 g/mol, bevorzugt im Bereich von 10.000 bis 1.000.000 g/mol, zweckmäßigerweise im Bereich von 15.000 bis 500.000 g/mol, insbesondere im Bereich von 20.000 bis 300.000 g/mol erhalten wird. Diese Werte beziehen sich auf das Gewichtsmittel des Molekulargewichts (Mw).

Die Polydispersität der erfindungsgemäß erhältlichen Polymere ist der Quotient aus Massen- und Zahlenmittel des Molekulargewichtes (Mw/Mn). Die Molekulargewichte können nach bekannten Methoden bestimmt werden. Beispielsweise kann die Gelpermeationschromatographie, auch bekannt unter "Size Exclusion Chromatography" (SEC) eingesetzt werden. Ebenso ist ein osmometrisches Verfahren, wie beispielsweise die "Vapour Phase Osmometry" zur Bestimmung der Molekulargewichte einsetzbar. Die genannten Verfahren sind beispielsweise beschrieben in: P.J. Flory, "Principles of Polymer Chemistry" Cornell University Press (1953), Chapter VII, 266-316 sowie "Macromeolecules, an

Introduction to Polymer Science", F.A. Bovey and F. H. Winslow, Editors, Academic Press (1979), 296-312 sowie W.W. Yau, J.J. Kirkland and D.D. Bly, "Modern Size Exclusion Liquid Chromatography, John Wiley and Sons, New York, 1979. Bevorzugt wird zur Bestimmung der Molekulargewichte der hierin vorgestellten Polymere die Gelpermeationschromatographie eingesetzt. Es sollte bevorzugt gegen Polymethylacrylat- oder Polyacrylat-Standards gemessen werden.

Die durch das erfindungsgemäße Verfahren erhältlichen Polymerisate können auf an sich bekannte Weise isoliert, weiterverarbeitet und ggf. durch Zugabe geeigneter Additive konfektioniert werden. Zu diesen Additiven gehören unter anderem Viskositätsindexverbesserer, Antioxidantien, Alterungsschutzmittel, Verschleißschutzmittel, Korrosionsinhibitoren, Detergentien, Dispergentien, EP-Additive, Reibungsminderer, Farbstoffe, Geruchsstoffe, Metalldesaktivatoren und/oder Demulgatoren.

Die erfindungsgemäß erhältlichen Polymerisate können jedoch auch direkt, d. h. ohne weitere Zusätze, beispielsweise als Viskositätsindexverbesserer eingesetzt werden.

Nachfolgend wird die Erfindung durch Beispiele und Vergleichsbeispiele eingehender erläutert, ohne dass der Erfindungsgedanke auf diese besonderen Ausführungsformen beschränkt werden soll. Dabei wurden die angegebenen Größen, wie folgt, ermittelt:

Die angegebenen Molekulargewichte der Polymere sind Massenmittel (Mw). Die Polydispersitäten entsprechen dem Quotienten aus Massen-und Zahlenmittel des Molekulargewichtes (Mw/Mn).

Die angegebenen kinematischen Viskositäten beziehen sich dementsprechend auf die Polymerlösungen und nicht auf die reinen, isolierten Polymere. Die Bestimmung der kinematischen Viskositäten erfolgt nach üblichen Verfahren, z.B. im Ubbelohde-Viskosimeter nach ASTM D 445 oder in automatischen Messvorrichtungen der Firma Herzog. Die Angabe der kinematischen Viskositäten erfolgt immer in $mm^2/S$.

Die Bestimmung des Viskositätsindex erfolgte gemäß ASTM D 2270.

Der Begriff "Verdickungswirkung" bezieht sich auf die kinematische Viskosität einer Polymerlösung, die durch Verdünnung einer bestimmten Menge der Polymerlösung mit einem weiteren Lösemittel bei einer bestimmten Temperatur gemessen wird. Üblicherweise werden 10-15 Gew.-% der jeweils hergestellten Polymerlösung in einem 150N-Öl verdünnt und die kinematischen Viskositäten der resultierenden Lösung bei 40°C bzw. 100°C bestimmt.

Die Restmonomergehalte (z.B. $C_8$-$C_{18}$-Alkylacrylat, MMA) wurden nach üblichen Verfahren HPLC-analytisch bestimmt. Deren Angabe wird entweder in ppm oder Gew.-% in Bezug auf das Gesamtgewicht der hergestellten Polymerlösungen gemacht. Exemplarisch für langkettig alkylsubstituierte Acrylate sei erwähnt, dass der für beispielsweise $C_8$-$C_{18}$-Alkylacrylat angegebene Restmonomergehalt sämtliche verwendete Acrylatmonomere umfasst, welche Alkylsubstituenten mit 8 und 18 Kohlenstoffatomen in den Esterseitenketten tragen.

Vergleichsbeispiel 1

In einem 10 Liter Edelstahl Laborreaktor ausgestattet mit einem 3-stufigen InterMIG-Rührer (betrieben mit 78 Umdrehungen pro Minute), Thermometer und Rückflusskühler werden 1932 g eines Mineralöles der Kategorie Gruppe 3 (z. B. Nexbase 3020 der Firma Fortum) und 214,7 g einer Monomermischung bestehend aus $C_{12}$-$C_{18}$-Alkylmethacrylaten, Dimethylaminopropylmethacrylamid und Methylmethacrylat (MMA) im Gewichtsverhältnis 86,5:3,5:10,0 zusammen mit 0,28 g Dodecylmercaptan vorgelegt. Die Temperatur wird auf 90°C eingestellt. Danach werden 5,98 g tert-Butylperoctoat zugegeben und gleichzeitig ein Zulauf bestehend aus 4753,3 g einer Mischung aus $C_{12}$-$C_{18}$-Alkylmethacrylaten, Dimethylaminopropylmethacrylamid und Methylmethacrylat im Gewichtsverhältnis 86,5:3,5:10,0 sowie 9,51 g tert-Butylperoctoat und 6,18 g Dodecylmercaptan gestartet. Die Zulaufzeit beträgt 3,5 Stunden und die Zulaufgeschwindigkeit verläuft gleichmäßig. 2 Stunden nach Zulaufende werden nochmals 10,2 g tert-Butylperoctoat zugegeben. Zur besseren Handhabung sowie zur Stabilisierung werden noch 2132,7 g eines 100N-Öles und 18,1 g 4-Methyl-2,6-di-tert-butylphenol zugegeben. Die Gesamtreaktionszeit beträgt 8 Stunden.

- *Molekulargewicht: 120000 g/mol*
- *Polydispersität: 3,05*
- *Kinematische Viskosität bei 100°C: 642,8 $mm^2/s$*
- *Verdickungswirkung (10% des obigen Produktes in einem 150N-Öl):*

    *bei 100°C: 12,68 $mm^2/s$*
    *bei 40°C: 66,8 $mm^2/s$*

- *Viskositätindex: 193*
- *Restmonomergehalt $C_{12-18}$-Alkylmethacrylat: 0,25 %*
- *Restmonomergehalt MMA: 640 ppm*

**Beispiel 1**

In einem 10 Liter Edelstahl Laborreaktor ausgestattet mit einem 3-stufigen InterMIG-Rührer (betrieben mit 150 Umdrehungen pro Minute), Thermometer und Rückflusskühler werden 1604,1 g eines Mineralöles der Kategorie Gruppe 3 (z. B. Nexbase 3020 d. Fa. Fortum) und 4125,0 g einer Monomermischung bestehend aus $C_{12}$-$C_{18}$-Alkylmethacrylaten, Dimethylaminopropylmethacrylamid und Methylmethacrylat (MMA) im Gewichtsverhältnis 86,5:3,5:10,0 zusammen mit 5,6 g Dodecylmercaptan vorgelegt. Die Temperatur wird auf 110°C eingestellt. Danach werden 10,3 g tert-Butylperoctoat in zwei Stunden zudosiert, wobei innerhalb der ersten Stunde 22% und innerhalb der zweiten Stunde 78% der angegebenen Menge zugegeben werden. 30 Minuten danach werden nochmals 4,1 g tert-Butylperoctoat zugegeben. Zur besseren Handhabung sowie zur Stabilisierung werden noch 1770,9 g eines 100N-Öles und 15,0 g 4-Methyl-2,6-di-tert-butylphenol zugegeben. Die Gesamtreaktionszeit beträgt 4 Stunden.

- *Molekulargewicht: 138000 g/mol*
- *Polydispersität: 3,10*
- *Kinematische Viskosität bei 100°C: 624,7 $mm^2/s$*
- *Verdickungswirkung (10% des obigen Produktes in einem 150N-Öl):*

  *bei 100°C: 12,94 $mm^2/s$*
  *bei 40°C: 67,3 $mm^2/s$*

- *Viskositätindex: 197*
- *Restmonomergehalt $C_{12-18}$-Alkylmethacrylat: 0,88 %*
- *Restmonomergehalt MMA: 1950 ppm*

**Vergleichsbeispiel 2**

In einem 24 $m^3$ Polymerisationsreaktor ausgestattet mit einem MIG-Rührer (betrieben mit 25 Umdrehungen pro Minute) und einem Prozessleitsystem zur Regelung der Prozessparameter werden 6672,7 kg eines 100N-Öles und 745,6 kg einer Monomermischung bestehend aus $C_{12}$-$C_{18}$-Alkylmethacrylaten und Methylmethacrylat (MMA) im Gewichtsverhältnis 87,0:13,0 zusammen mit 0,9 kg Dodecylmercaptan vorgelegt. Die Temperatur wird auf 100°C eingestellt. Danach werden 2,2 kg tert-Butylperoctoat zugegeben und gleichzeitig ein Zulauf bestehend aus 10594,8 kg einer Mischung aus $C_{12}$-$C_{18}$-Alkylmethacrylaten und Methylmethacrylat im Gewichtsverhältnis 87,0:13,0 sowie 17,0 kg tert-Butylperoctoat und 12,7 kg Dodecylmercaptan gestartet. Die Zulaufzeit beträgt 5 Stunden und die Zulaufgeschwindigkeit verläuft gleichmäßig. 2 Stunden nach Zulaufende werden nochmals 22,7 kg tert-Butylperoctoat zugegeben. Die Gesamtreaktionszeit beträgt 12 Stunden.

- *Molekulargewicht: 161000 g/mol*
- *Polydispersität: 2,30*
- *Kinematische Viskosität bei 100°C: 1496 $mm^2/s$*
- *Verdickungswirkung (10% des obigen Produktes in einem 150N-Öl):*

  *bei 100°C: 13,87 $mm^2/s$*
  *bei 40°C: 74,56 $mm^2/s$*

- *Viskositätindex: 193*
- *Restmonomergehalt C12-18-Alkylmethacrylat: 1,2 %*
- *Restmonomergehalt MMA: 0, 2 %*

**Beispiel 2**

In einem 48 $m^3$ Polymerisationsreaktor ausgestattet mit zwei Propeller-Rührer (betrieben mit 270 Umdrehungen pro Minute) und einem Prozessleitsystem zur Regelung der Prozessparameter werden 8941,0 kg eines 100N-Öles und 15119,7 kg einer Mischung bestehend aus $C_{12}$-$C_{18}$-Alkylmethacrylaten und Methylmethacrylat (MMA) im Gewichtsverhältnis 87,0:13,0 zusammen mit 25,7 kg Dodecylmercaptan vorgelegt. Die Temperatur wird auf 110°C eingestellt. Danach werden 39,5 kg tert-Butylperoctoat in 3,5 Stunden zudosiert, wobei innerhalb der ersten 1,5 Stunden 6,3%, innerhalb der nächsten Stunde 10,0% und innerhalb der dann folgenden Stunde 83,7% der gesamten Menge zugegeben werden. Die Gesamtreaktionszeit beträgt 8 Stunden.

- *Molekulargewicht: 166000 g/mol*
- *Polydispersität 2,41*
- *Kinematische Viskosität bei 100°C: 1238 $mm^2/s$*
- *Verdickungswirkung (10% des obigen Produktes in einem 150N-Öl):*

  *bei 100°C: 13,90 $mm^2/s$*
  *bei 40°C: 75,00 $mm^2/s$*

- *Viskositätindex: 193*
- *Restmonomergehalt $C_{12-18}$-Alkylmethacrylat: 1, 5 %*
- *Restmonomergehalt MMA: 0, 2 %*

**Vergleichsbeispiel 3**

In einem 24 $m^3$ Polymerisationsreaktor ausgestattet mit einem MIG-Rührer (betrieben mit 25 Umdrehungen pro Minute) und einem Prozessleitsystem zur Regelung der Prozessparameter werden 2888,1 kg eines 100N-Öles und 315,7 kg einer Monomermischung bestehend aus $C_{12}$-$C_{18}$-Alkylmethacrylaten und Methylmethacrylat (MMA) im Gewichtsverhältnis 85,0:15,0 zusammen mit 2,9 kg Dodecylmercaptan vorgelegt. Die Temperatur wird auf 100°C eingestellt. Danach werden 4,1 kg tert-Butylperoctoat zugegeben und gleichzeitig ein Zulauf bestehend aus 12804,3 kg einer Mischung aus $C_{12}$-$C_{18}$-Alkylmethacrylaten und Methylmethacrylat im Gewichtsverhältnis 85,0:15,0 sowie 32,0 kg tert-Butylperoctoat und 116,9 kg Dodecylmercaptan gestartet. Die Zulaufzeit beträgt 5 Stunden und die Zulaufgeschwindigkeit verläuft gleichmäßig. 2 Stunden nach Zulaufende werden nochmals 26,2 kg tert-Butylperoctoat zugegeben. Die Gesamtreaktionszeit beträgt 12 Stunden.

- *Molekulargewicht: 53300 g/mol*
- *Polydispersität: 2, 00*
- *Kinematische Viskosität bei 100°C: 1397 $mm^2/s$*
- *Verdickungswirkung (12% des obigen Produktes in einem 150N-Öl):*

  *bei 100°C: 11,0 $mm^2/s$*
  *bei 40°C: 65,7 $mm^2/s$*

- *Viskositätindex. 160*
- *Restmonomergehalt $C_{12-18}$-Alkylmethacrylat 0,89 %*
- *Restmonomergehalt MMA: 0,14* %

**Beispiel 3**

In einem 11 $m^3$ Polymerisationsreaktor ausgestattet mit einem MIG-Rührer (betrieben mit 31 Umdrehungen pro Minute) und einem Prozessleitsystem zur Regelung der Prozessparameter werden 1377,9 kg eines 100N-Öles und 6150,3 kg einer Monomermischung bestehend aus $C_{12}$-$C_{18}$-Alkylmethacrylaten und Methylmethacrylat (MMA) im Gewichtsverhältnis 85,0:15,0 sowie 52,3 kg Dodecylmercaptan vorgelegt. Die Temperatur wird auf 110°C eingestellt. Danach werden 9,8 kg tert-Butylperoctoat in 3,5 Stunden zudosiert, wobei innerhalb der ersten 1,5 Stunden 6,3%, innerhalb der nächsten Stunde 10,0% und innerhalb der letzten Stunde 83,7% der gesamten Menge zugegeben werden. Die Gesamtreaktionszeit beträgt 8 Stunden.

- *Molekulargewicht: 55400 g/mol*
- *Polydispersität: 2,04*
- *Kinematische Viskosität bei 100°*C: 1219 *$mm^2/s$*
- *Verdickungswirkung (12% des obigen Produktes in einem 150N-Öl):*

  *bei 100°C: 10,99 $mm^2/s$*
  *bei 40°C: 65,3 $mm^2/s$*

- *Viskositätindex: 161*
- *Restmonomergehalt $C_{12-18}$-Alkylmethacrylat: 1,63 %*
- *Restmonomergehalt MMA: 0, 27 %*

**Vergleichsbeispiel 4**

In einem 24 $m^3$ Polymerisationsreaktor ausgestattet mit einem MIG-Rührer (betrieben mit 25 Umdrehungen pro Minute) und einem Prozessleitsystem zur Regelung der Prozessparameter werden 5593,1 kg eines 100N-Öles und 622,8 kg einer Monomermischung bestehend aus $C_{12}$-$C_{18}$-Alkylmethacrylaten und Methylmethacrylat (MMA) im Gewichtsverhältnis 85,0:15,0 zusammen mit 2,9 kg Dodecylmercaptan vorgelegt. Die Temperatur wird auf 100°C eingestellt. Danach werden 3,8 kg tert-Butylperoctoat zugegeben und gleichzeitig ein Zulauf bestehend aus 11796,9 kg einer Mischung aus $C_{12}$-$C_{18}$-Alkylmethacrylaten und Methylmethacrylat im Gewichtsverhältnis 85,0:15,0 sowie 29,5 kg tert-Butylperoctoat und 54,2 kg Dodecylmercaptan gestartet. Die Zulaufzeit beträgt 5 Stunden und die Zulaufgeschwindigkeit verläuft gleichmäßig. 2 Stunden nach Zulaufende werden nochmals 24,8 kg tert-Butylperoctoat zugegeben. Die Gesamtreaktionszeit beträgt 12 Stunden.

- *Molekulargewicht: 98100 g/mol*
- *Polydispersität: 2,12*
- *Kinematische Viskosität bei 100°C: 1251 $mm^2/s$*
- *Verdickungswirkung (10% des obigen Produktes in einem 150N-Öl):*

  *bei 100°C: 11, 26 $mm^2/s$*
  *bei 40°C: 61,6 $mm^2/s$*

- *Viskositätindex: 179*
- *Restmonomergehalt $C_{12\text{-}18}$-Alkylmethacrylat: 0,84 %*
- *Restmonomergehalt MMA: 0,15 %*

**Beispiel 4**

In einem 48 $m^3$ Polymerisationsreaktor ausgestattet mit zwei Propeller-Rührer (betrieben mit 270 Umdrehungen pro Minute) und einem Prozessleitsystem zur Regelung der Prozessparameter werden 7480,7 kg eines 100N-Öles und 16559,9 kg einer Monomermischung bestehend aus $C_{12}$-$C_{18}$-Alkylmethacrylaten und Methylmethacrylat (MMA) im Gewichtsverhältnis 85,0:15,0 zusammen mit 67,9 kg Dodecylmercaptan vorgelegt. Die Temperatur wird auf 110°C eingestellt. Danach werden 34,0 kg tert-Butylperoctoat in 3,5 Stunden zudosiert, wobei innerhalb der ersten 1,5 Stunden 6,3%, innerhalb der nächsten Stunde 10,0% und innerhalb der letzten Stunde 83,7% der gesamten Menge zugegeben werden. Die Gesamtreaktionszeit beträgt 8 Stunden.

- *Molekulargewicht: 98700 g/mol*
- *Polydispersität: 2,14*
- *Kinematische Viskosität bei 100°C:* 1149 *$mm^2/s$*
- *Verdickungswirkung (10% des obigen Produktes in einem 150N-Öl):*

  *bei 100°C: 11, 20 $mm^2/s$*
  *bei 40°C: 61,2 $mm^2/s$*

- *Viskositätindex: 178*
- *Restmonomergehalt $C_{12\text{-}18}$-Alkylmethacrylat: 1,28 %*
- *Restmonomergehalt MMA: 0, 23 %*

In der nachfolgenden Tabelle 1 werden die eingesetzten Mengen an Initiator gegenübergestellt.

Tabelle 1. Eingesetzte Initiatormengen

| | **eingesetzte Menge Initiator [kg]** | **Ansatzgröße [kg]** | **Initiatormenge pro 100 kg Fertigprodukt [kg]** | **Initiator-einsparung in %** |
|---|---|---|---|---|
| Vergleich 1 | 0,0257 | 9,0 | 0,2854 | |
| Beispiel 1 | 0,0144 | 7,5 | 0,1920 | - 32,7% |
| Vergleich 2 | 41,9 | 18013,1 | 0,2326 | |

(fortgesetzt)

| | eingesetzte Menge Initiator [kg] | Ansatzgröße [kg] | Initiatormenge pro 100 kg Fertigprodukt [kg] | Initiator-einsparung in % |
|---|---|---|---|---|
| Beispiel 2 | 39,5 | 24060,7 | 0,1642 | - 29,4% |
| Vergleich 3 | 36,1 | 16008,1 | 0,2255 | |
| Beispiel 3 | 9,8 | 7528,2 | 0,1302 | - 42,3% |
| Vergleich 4 | 33,3 | 18012,8 | 0,1849 | |
| Beispiel 4 | 34 | 24040,6 | 0,1414 | - 23,5% |

## Patentansprüche

1. Verfahren zur radikalischen Polymerisation einer oder mehrerer ethylenisch-ungesättigter Verbindungen, **dadurch gekennzeichnet, dass** man, bezogen auf das Gesamtgewicht der ethylenisch-ungesättigten Verbindungen, mindestens 80,0 Gew.-% der ethylenisch-ungesättigten Verbindungen vorlegt und mindestens einen Polymerisationsinitiator für die radikalische Polymerisation in mindestens zwei Schritten zugibt, wobei man im zweiten Schritt mehr Polymerisationsinitiator als im ersten Schritt zugibt und wobei man im zweiten Schritt, bezogen auf das Gesamtgewicht des im ersten Schritts zugegebenen Polymerisationsinitiators, mindestens 120 % der im ersten Schritt zugegebenen Menge an Polymerisationsinitiator zugibt und eine Monomerzusammensetzung eingesetzt wird welche, jeweils bezogen auf das Gesamtgewicht der Monomerenzusammensetzung, aus:

   a) 0 bis 40 Gew.-% einer oder mehrerer ethylenisch-ungesättigter Esterverbindungen der Formel (I)

   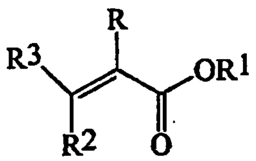

   (I),

   worin R Wasserstoff oder Methyl darstellt, $R^1$ einen linearen oder verzweigten Alkylrest mit 1 bis 5 Kohlenstoffatomen bedeutet, $R^2$ und $R^3$ unabhängig Wasserstoff oder eine Gruppe der Formel-COOR' darstellen, worin R' Wasserstoff oder eine Alkylgruppe mit 1 bis 5 Kohlenstoffatomen bedeutet,
   b) 60 bis 100 Gew.-% einer oder mehrerer ethylenisch-ungesättigter Esterverbindungen der Formel (II)

   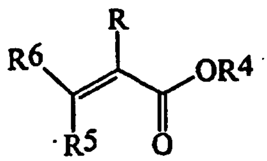

   (II),

   worin R Wasserstoff oder Methyl darstellt, $R^4$ einen linearen oder verzweigten Alkylrest mit 6 bis 40 Kohlenstoffatomen bedeutet, $R^5$ und $R^6$ unabhängig Wasserstoff oder eine Gruppe der Formel-COOR" darstellen, worin R" Wasserstoff oder eine Alkylgruppe mit 6 bis 40 Kohlenstoffatomen bedeutet, und
   c) 0 bis 40 Gew.-% eines oder mehrerer Comonomere besteht.

2. Verfahren nach Anspruch 1, **dadurch gekennzeichnet, dass** man den zweiten Schritt zu einem Zeitpunkt beginnt, bei welchem 0,01 bis 50,0 % der Gesamtmenge des während dem ersten Schritt zugegebenen Polymerisationsinitiators noch nicht verbraucht sind.

3. Verfahren nach Anspruch 1, **dadurch gekennzeichnet, dass** der Polymerisationsinitiator im ersten und im zweiten Schritt zudosiert wird und das Verhältnis der mittleren Dosierrate des zweiten Schrittes zu der mittleren Dosierrate des ersten Schrittes größer 1,2:1 ist.

4. Verfahren nach Anspruch 3, **dadurch gekennzeichnet, dass** man den zweiten Schritt zu einem Zeitpunkt beginnt, bei welchem 0,01 bis 50,0 % der Gesamtmenge des während dem ersten Schritt zugegebenen Polymerisationsinitiators noch nicht verbraucht sind.

5. Verfahren nach einem der vorangehenden Ansprüche, **dadurch gekennzeichnet, dass** man den Polymerisationsinitiator in mindestens drei Schritten zugibt, wobei man im dritten Schritt mehr Initiator als im ersten und im zweiten Schritt zugibt.

6. Verfahren nach Anspruch 5, **dadurch gekennzeichnet, dass** man im dritten Schritt den Polymerisationsinitiator auf einmal zugibt.

7. Verfahren nach Anspruch 5, **dadurch gekennzeichnet, dass** man im dritten Schritt den Polymerisationsinitiator zudosiert.

8. Verfahren nach Anspruch 7, **dadurch gekennzeichnet, dass** man die Dosiergeschwindigkeiten derart wählt, dass die mittlere Dosierrate des dritten Schrittes größer als die mittlere Dosierrate des zweiten Schrittes ist.

9. Verfahren nach Anspruch 7 oder 8, **dadurch gekennzeichnet, dass** man die Dosiergeschwindigkeiten derart wählt, dass das Verhältnis der mittleren Dosierrate des dritten Schrittes zu der mittleren Dosierrate des zweiten Schrittes größer 1,2:1 ist.

10. Verfahren nach mindestens einem der Ansprüche 5 bis 9, **dadurch gekennzeichnet, dass** man den dritten Schritt zu einem Zeitpunkt beginnt, bei welchem 0,01 bis 50,0 % der Gesamtmenge des während dem zweiten Schritt zugegebenen Polymerisationsinitiators noch nicht verbraucht sind.

11. Verfahren nach Anspruch 3, **dadurch gekennzeichnet, dass** man den Polymerisationsinitiator mit kontinuierlich ansteigender Dosiergeschwindigkeit zudosiert.

12. Verfahren nach mindestens einem der vorangehenden Ansprüche, **dadurch gekennzeichnet, dass** man mindestens ein Peroxid als Initiator einsetzt.

13. Verfahren nach mindestens einem der vorangehenden Ansprüche, **dadurch gekennzeichnet, dass** man den Polymerisationsinitiator in gelöster Form zugibt.

14. Verfahren nach mindestens einem der vorangehenden Ansprüche, **dadurch gekennzeichnet, dass** man den Polymerisationsinitiator bei einer Temperatur im Bereich von 50 bis 180 °C zugibt und das Reaktionsgemisch über die gesamte Reaktionsdauer bei einer Temperatur in diesem Bereich hält.

15. Verfahren nach mindestens einem der vorangehenden Ansprüche, **dadurch gekennzeichnet, dass** man die Polymerisation in mindestens einem organischen Lösungsmittel durchführt.

16. Verfahren nach Anspruch 15, **dadurch gekennzeichnet, dass** man die Polymerisation in Mineralöl der API-Gruppe I, II oder III oder in synthetischen Ölen durchführt.

17. Verfahren nach mindestens einem der vorangehenden Ansprüche, **dadurch gekennzeichnet, dass** man die Mengen an Monomeren, Polymerisationsinitiator und ggf. Kettenüberträger derart wählt, dass ein Gewichtsmittel des Molekulargewichtes im Bereich von 2.000 und 5.000.000 g/mol erhalten wird.

## Claims

1. Process for free-radically polymerizing one or more ethylenically unsaturated compounds, **characterized in that**, based on the total weight of the ethylenically unsaturated compounds, at least 80.0% by weight of the ethylenically unsaturated compounds is initially charged and at least one polymerization initiator for the free-radical polymerization is added in at least two steps, more polymerization initiator being added in the second step than in the first step, and, based on the total weight of the polymerization initiator added in the first step, at least 120% of the amount of polymerization initiator added in the first step being added in the second step, and a monomer composition being used which, based in each case on the total weight of the monomer composition, consists of:

a) from 0 to 40% by weight of one or more ethylenically unsaturated ester compounds of the formula (I)

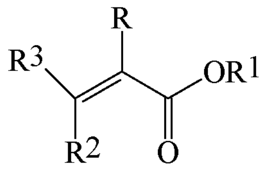

(I)

where R is hydrogen or methyl, $R^1$ is a linear or branched alkyl radical having 1 to 5 carbon atoms, $R^2$ and $R^3$ are each independently hydrogen or a group of the formula -COOR' where R' is hydrogen or an alkyl group having from 1 to 5 carbon atoms,

b) from 60 to 100% by weight of one or more ethylenically unsaturated ester compounds of the formula (II)

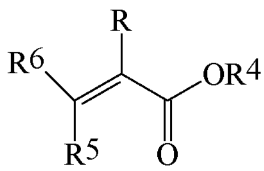

(II),

where R is hydrogen or methyl, $R^4$ is a linear or branched alkyl radical having from 6 to 40 carbon atoms, $R^5$ and $R^6$ are independently hydrogen or a group of the formula -COOR" where R" is hydrogen or an alkyl group having from 6 to 40 carbon atoms, and

c) from 0 to 40% by weight of one or more comonomers.

**2.** Process according to Claim 1, **characterized in that** the second step is begun at a time at which from 0.01 to 50.0% of the total amount of the polymerization initiator added during the first step is as yet unconsumed.

**3.** Process according to Claim 1, **characterized in that** the polymerization initiator is metered in in the first and in the second step, and the ratio of the mean metering rate of the second step to the mean metering rate of the first step is greater than 1.2:1.

**4.** Process according to Claim 3, **characterized in that** the second step is begun at a time at which from 0.01 to 50.0% of the total amount of the polymerization initiator added during the first step is as yet unconsumed.

**5.** Process according to one of the preceding claims, **characterized in that** the polymerization initiator is added in at least three steps, more initiator being added in the third step than in the first and in the second step.

**6.** Process according to Claim 5, **characterized in that** the polymerization initiator is added all at once in the third step.

**7.** Process according to Claim 5, **characterized in that** the polymerization initiator is metered in in the third step.

**8.** Process according to Claim 7, **characterized in that** the metering rates are selected such that the mean metering rate of the third step is greater than the mean metering rate of the second step.

**9.** Process according to Claim 7 or 8, **characterized in that** the metering rates are selected such that the ratio of the mean metering rate of the third step to the mean metering rate of the second step is greater than 1.2:1.

**10.** Process according to at least one of Claims 5 to 9, **characterized in that** the third step is begun at a time at which from 0.01 to 50.0% of the total amount of the polymerization initiator added during the second step is as yet unconsumed

**11.** Process according to Claim 3, **characterized in that** the polymerization initiator is metered in with continuously rising metering rate.

**12.** Process according to at least one of the preceding claims, **characterized in that** at least one peroxide is used as the initiator.

**13.** Process according to at least one of the preceding claims, **characterized in that** the polymerization initiator is added in dissolved form.

**14.** Process according to at least one of the preceding claims, **characterized in that** the polymerization initiator is added at a temperature in the range from 50 to 180°C and the reaction mixture is kept at a temperature in this range over the entire reaction time.

**15.** Process according to at least one of the preceding claims, **characterized in that** the polymerization is performed in at least one organic solvent.

**16.** Process according to Claim 15, **characterized in that** the polymerization is performed in mineral oil of API group I, II or III or in synthetic oils.

**17.** Process according to at least one of the preceding claims, **characterized in that** the amount of monomers, polymerization initiator and, if appropriate, chain transferer is selected such that a weight-average molecular weight in the range from 2000 to 5 000 000 g/mol is obtained.

## Revendications

**1.** Procédé pour la polymérisation radicalaire d'un ou plusieurs composés à insaturation éthylénique, **caractérisé en ce qu'**on dispose au préalable, par rapport au poids total des composés à insaturation éthylénique, au moins 80,0% en poids des composés à insaturation éthylénique et on ajoute en au moins deux étapes au moins un amorceur de polymérisation pour la polymérisation radicalaire, en ajoutant dans la deuxième étape plus d'amorceur de polymérisation que dans la première étape et en ajoutant dans la deuxième étape, par rapport au poids total de l'amorceur de polymérisation ajouté dans la première étape, au moins 120 % de la quantité d'amorceur de polymérisation ajouté dans la première étape et en utilisant une composition de monomères qui est constituée, par rapport au poids total de la composition de monomères, de :

a) 0 à 40 % en poids d'un ou plusieurs composés de type ester à insaturation éthylénique, de formule (I)

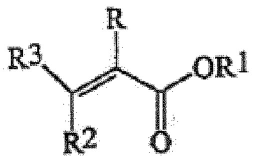

(I),

dans laquelle R représente un atome d'hydrogène ou le groupe méthyle, $R^1$ représente un radical alkyle linéaire ou ramifié ayant de 1 à 5 atomes de carbone, $R^2$ et $R^3$ représentent indépendamment un atome d'hydrogène ou un groupe de formule -COOR', dans laquelle R' représente un atome d'hydrogène ou un groupe alkyle ayant de 1 à 5 atomes de carbone,

b) 60 à 100 % en poids d'un ou plusieurs composés de type ester à insaturation éthylénique, de formule (II)

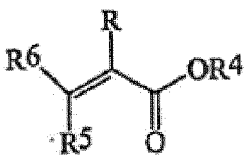

(II),

dans laquelle R représente un atome d'hydrogène ou le groupe méthyle, $R^4$ représente un radical alkyle linéaire ou ramifié ayant de 6 à 40 atomes de carbone, $R^5$ et $R^6$ représentent indépendamment un atome d'hydrogène ou un groupe de formule -COOR", dans laquelle R" représente un atome d'hydrogène ou un groupe alkyle ayant de 6 à 40 atomes de carbone,

et

c) 0 à 40 % en poids d'un ou plusieurs comonomères.

2. Procédé selon la revendication 1, **caractérisé en ce qu'**on commence la deuxième étape à un instant auquel 0,01 à 50,0% de la quantité totale de l'amorceur de polymérisation ajouté pendant la première étape ne sont pas encore consommés.

3. Procédé selon la revendication 1, **caractérisé en ce que** dans la première et dans la deuxième étape on ajoute par addition dosée l'amorceur de polymérisation et le rapport de la vitesse moyenne d'addition dosée de la deuxième étape à la vitesse moyenne d'addition dosée de la première étape est supérieur à 1,2:1.

4. Procédé selon la revendication 3, **caractérisé en ce qu'**on commence la deuxième étape à un instant auquel 0,01 à 50,0 % de la quantité totale de l'amorceur de polymérisation ajouté pendant la première étape ne sont pas encore consommés.

5. Procédé selon l'une quelconque des revendications précédentes, **caractérisé en ce qu'**on ajoute l'amorceur de polymérisation en au moins trois étapes, en ajoutant dans la troisième étape plus d'amorceur que dans la première et dans la deuxième étape.

6. Procédé selon la revendication 5, **caractérisé en ce que** dans la troisième étape on ajoute l'amorceur de polymérisation en une fois.

7. Procédé selon la revendication 5, **caractérisé en ce que** dans la troisième étape on ajoute l'amorceur de polymérisation par addition dosée.

8. Procédé selon la revendication 7, **caractérisé en ce qu'**on choisit les vitesses d'addition dosée de manière que la vitesse moyenne d'addition dosée de la troisième étape soit supérieure à la vitesse moyenne d'addition dosée de la deuxième étape.

9. Procédé selon la revendication 7 ou 8, **caractérisé en ce qu'**on choisit les vitesses d'addition dosée de manière que le rapport de la vitesse moyenne d'addition dosée de la troisième étape à la vitesse moyenne d'addition dosée de la deuxième étape soit supérieur à 1,2:1.

10. Procédé selon au moins l'une des revendications 5 à 9, **caractérisé en ce qu'**on commence la troisième étape à un instant auquel 0,01 à 50,0 % de la quantité totale de l'amorceur de polymérisation ajouté pendant la deuxième étape ne sont pas encore consommés.

11. Procédé selon la revendication 3, **caractérisé en ce qu'**on ajoute l'amorceur de polymérisation par addition dosée à une vitesse d'addition augmentant en continu.

12. Procédé selon au moins l'une des revendications précédentes, **caractérisé en ce qu'**on utilise comme amorceur au moins un peroxyde.

13. Procédé selon au moins l'une des revendications précédentes, **caractérisé en ce qu'**on ajoute l'amorceur de polymérisation sous forme dissoute.

14. Procédé selon au moins l'une des revendications précédentes, **caractérisé en ce qu'**on ajoute l'amorceur de polymérisation à une température dans la plage de 50 à 180 °C et pendant toute la durée de la réaction on maintient le mélange réactionnel à une température dans cette plage.

15. Procédé selon au moins l'une des revendications précédentes, **caractérisé en ce qu'**on effectue la polymérisation dans au moins un solvant organique.

16. Procédé selon la revendication 15, **caractérisé en ce qu'**on effectue la polymérisation dans de l'huile minérale du groupe API I, II ou III ou dans des huiles synthétiques.

17. Procédé selon au moins l'une des revendications précédentes, **caractérisé en ce qu'**on choisit les quantités de monomères, d'amorceur de polymérisation et éventuellement d'agent de transfert de chaîne de manière à obtenir une moyenne en poids de la masse moléculaire dans la plage de 2 000 à 5 000 000 g/mole.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0750031 A2


### In der Beschreibung aufgeführte Nicht-Patentliteratur


- Ullmanns's Encyclopedia of Industrial Chemistry
- **H. RAUSCH-PUNTIGAM ; T. VÖLKER.** Acryl- und Methacrylverbindungen. Springer, 1967
- **HOUBEN-WEYL.** Methoden der organischen Chemie. Georg Thieme, 1961, vol. XIV/1, 66ff
- **KIRK-OTHMER.** Encyclopedia of Chemical Technology. J. Wiley, 1978, vol. 1, 296ff
- lubricants and related products. **STICHWORT.** Ullmanns Encyclopedia of Industrial Chemistry. 1997
- **P.J. FLORY.** Principles of Polymer Chemistry. Cornell University Press, 1953, 266-316
- Macromeolecules, an Introduction to Polymer Science. Academic Press, 1979, 296-312
- **W.W. YAU ; J.J. KIRKLAND ; D.D. BLY.** Modern Size Exclusion Liquid Chromatography. John Wiley and Sons, 1979